# EUROPÄISCHE PATENTSCHRIFT

(11) **EP 3 312 986 B1**
(45) Veröffentlichungstag und Bekanntmachung des Hinweises auf die Patenterteilung: **15.07.2020**
(21) Anmeldenummer: 17190534.2
(22) Anmeldetag: 12.09.2017
(51) Int. Cl.: H02P 1/16, H02P 25/08, H02P 25/089

(54) **VERKÜRZUNG DER AUSRICHTPHASE BEI EINEM RELUKTANZMOTOR**
SHORTENING OF THE ALIGNMENT PHASE OF A RELUCTANCE MOTOR
RACCOURCISSEMENT DE LA PHASE DE CALIBRAGE DANS UN MOTEUR À RÉLUCTANCE

(30) Priorität: 20.10.2016 DE 102016119988
(43) Veröffentlichungstag der Anmeldung: 25.04.2018
(73) Patentinhaber: Miele & Cie. KG, 33332 Gütersloh (DE)
(72) Erfinder: Neufeld, Alexander, 33619 Bielefeld (DE)

(56) Entgegenhaltungen:
- US-A1- 2014 117 901
- US-A1- 2016 072 413
- US-B1- 6 448 736

## Beschreibung

Die Erfindung betrifft ein Verfahren und eine Vorrichtung zur Regelung der Phasenspannung eines Reluktanzmotors in Abhängigkeit vom Phasenstrom. Dies wird verwendet, um die Ausrichtphase des Rotors zu verkürzen.

Beim Einsatz eines SRM (Switched Reluctance Motor bzw. geschalteter Reluktanzmotor) muss im Gegensatz zu anderen Motoren, z.B. Reihenschlussmotoren, die Position des Rotors vor dem Starten bekannt oder definiert sein. Ansonsten ist ein Hochlauf des Motors und das Hochlaufen in eine bestimmte Drehrichtung nicht möglich.

Es ist bekannt, mit einem Rotorlagesensor die Position des Rotors zu bestimmen, um die initiale Ausrichtung des Rotors zu erkennen. Ein zusätzlicher Sensor ist jedoch nachteilig, da er höhere Kosten und eine größere Komplexität des Motors und der Ansteuerung bedingt sowie potenziell die Ausfallwahrscheinlichkeit erhöht.

Eine bekannte Lösung von bürsten- und sensorlosen Antrieben ist es, den Rotor initial mit einem Gleichstrom auszurichten und erst dann hochlaufen zu lassen, wenn der Rotor sich nach dem Einschwingen ausgerichtet hat. Da aufgrund des fehlenden Lagesensors nicht bekannt ist, wie der Rotor anfänglich steht und wie lange der Rotor während der Ausrichtphase bzw. Einschwingphase braucht, bis er in der Ausrichtposition steht, wird üblicherweise eine ungünstigste bzw. maximale Zeitspanne ("worst case"-Betrachtung) für das Ausrichten angenommen. Insbesondere Motoren, die sehr reibungsarm gelagert sind, brauchen eine vergleichsweise sehr lange Zeitspanne, bis der Rotor in der Ausrichtposition steht und nicht mehr schwingt. Bei Lüftern mit großen Gebläserädern kann dies bis zu einigen Sekunden dauern.

Die lange Ausrichtphase bei sensorlosen Motoren stellt für den Bediener eine Totzeit dar, in der scheinbar nichts passiert. Von Benutzern eines Haushaltgeräts mit einem derartigen Motor wird dieses Verhalten nicht akzeptiert bzw. als nicht normal empfunden. Beispielsweise wird eine Dunstabzugshaube oder ein Sauger mit einem Gebläse eingeschaltet und erst nach einigen Sekunden bemerkt, dass das Gebläse hörbar/fühlbar losläuft. Die unvermeidliche Wartezeit bis zum Erreichen einer Betriebsbereitschaft des Geräts ist für den Benutzer unkomfortabel. Dies führt dazu, dass der Benutzer zumindest verärgert ist. Da es relativ lange dauert, bis beispielsweise bei einem Staubsauger durch das Arbeitsgeräusch das Laufen des Motors akustisch wahrnehmbar wird, kann beim Benutzer sogar der Eindruck eines Defekts entstehen. Dies führt im schlimmsten Fall sogar dazu, dass das Gerät reklamiert wird, da ein Defekt vermutet wird.

In den Fällen, wo ein SRM mit einem Rotorlagesensor zum Einsatz kommt, ergibt sich ein anderes Problem. Bei Ausfall oder verschlechterter Funktion des Lagesensors wird die Funktion des Motors beeinträchtigt, bis hin zum Ausfall des damit ausgerüsteten Geräts. In vielen bekannten Fällen ist der Rotorlagesensor ein optisches System, das schnell verschmutzen kann und daher in absehbarer Zeit zum Totalausfall des Gerätes führt.

Aus der US 6,448,736 B1 ist ein Steuerverfahren eines geschalteten Reluktanzmotors mit zwei Phasen bekannt. Das Verfahren umfasst als initialen Schritt das Ausrichten des Rotors mit der zweiten Phase.

Die vorliegende Erfindung widmet sich daher dem Problem, den Rotor eines SRM vor dem Hochlauf möglichst schnell in eine definierte Ausgangsposition zu bringen, und ohne dafür auf einen Rotorlagesensor angewiesen zu sein. Die Herausforderung an dieser Stelle ist es, den Rotor schnell, d.h. in einer Zeit, die Benutzer nicht als unkomfortable oder ungewöhnliche Verzögerung empfindet, in die definierte Ausgangsposition zu bringen, um den Motor hochlaufen lassen zu können. Die Ausrichtphase kann zwar prinzipbedingt nicht vollständig eliminiert werden, eine Verkürzung auf eine Dauer von beispielsweise deutlich unterhalb einer Sekunde, beispielsweise einer halben Sekunde oder weniger, genügt jedoch, um ein für die meisten Benutzer akzeptables Verhalten herzustellen. Ziel ist es, die Anzahl der Schwingungen um die Ausrichtposition auf wenige Schwingungen zu reduzieren.

Diese Aufgabe wird durch ein Verfahren sowie eine Vorrichtung nach den unabhängigen Ansprüchen gelöst. Vorteilhafte Ausgestaltungen und Weiterbildungen der Erfindung ergeben sich aus den abhängigen Ansprüchen.

Gemäß einem ersten Aspekt der Erfindung wird ein Verfahren zur Ansteuerung eines geschalteten Reluktanzmotors bereitgestellt, umfassend:
- Anlegen einer definierten Phasenspannung an mindestens eine Phase des ruhenden Reluktanzmotors;
- Bestimmen des Verlaufs des Phasenstroms in der mindestens einen Phase; und
- Regeln der Phasenspannung abhängig von dem Verlauf des Phasenstroms.

Im ausgeschalteten Zustand hält ein Reluktanzmotor die Position des Rotors nicht aufrecht, so dass initial normalerweise keine Ausrichtung vorliegt. Beim Anlegen einer definierten, z.B. konstanten, Gleichspannung wird sich daher der Rotor in eine Ausrichtposition drehen. Der Rotor bleibt jedoch nicht sofort in der ausgerichteten Position stehen, sondern schwingt über diese hinaus und wieder zurück, bis er schließlich stillsteht. Die Schwingung hängt ab vom Trägheitsmoment *J* des Rotors und der Güte der Lagerung. Je größer J und je weniger Reibung in der Lagerung vorhanden ist, desto länger dauert der Einschwingvorgang. Ein Anlaufen kann aber erst nach dem Ausrichten erfolgen.

Erfindungsgemäß wird der Verlauf des Phasenstroms bestimmt, und die Phasenspannung entsprechend geregelt. Die Amplitude des Phasenstroms ändert sich, weil die Induktivität der Phase von der Position des Rotors abhängig ist. Daher oszilliert der Phasenstrom gleichermaßen um den Wert, welcher der ausgerichteten Position des Rotors entspricht, während der Rotor um die ausgerichtete Position herum schwingt. Erst wenn der Rotor stillsteht bzw. ausgerichtet ist, bleibt der Phasenstrom - bei konstanter Phasenspannung - konstant. Aus dem Verlauf des Phasenstroms kann daher die Position des Rotors in Bezug auf die ausgerichtete Position abgeleitet werden.

Durch Regeln der Phasenspannung in Abhängigkeit vom Verlauf des Phasenstroms kann die Schwingung des Rotors beeinflusst werden. Dadurch kann die Einschwingphase deutlich verkürzt werden.

Die Erfindung kann bei Reluktanzmotoren mit einer beliebigen Anzahl an Phasen angewendet werden. Weiterhin können erfindungsgemäß bei Reluktanzmotoren mit mehreren Phasen ein oder mehrere Phasen entsprechend angesteuert werden.

Gemäß der Erfindung wird die angelegte Phasenspannung jeweils verringert, nachdem ein lokaler Extremwert des Phasenstroms auftritt. Das Auftreten eines lokalen Maximums oder Minimums im Phasenstrom bedeutet, dass der Rotor maximal aus der ausgerichteten Position ausgeschwungen ist und im Begriff ist, in die Ausrichtposition zurückzuschwingen. Um die Amplitude der Schwingung zu verringern, wird gemäß der Ausführungsform die Phasenspannung verringert, um die Amplitude des nächsten Überschwingers zu verringern.

Im Falle mehrerer Phasenströme können diese berücksichtigt werden. Beispielsweise kann bei einem mehrphasigen Reluktanzmotor das Verfahren mit der Phase als die mindestens eine Phase ausgeführt werden, die initial bei gleichzeitiger Ansteuerung der Phasen den größten Signalausschlag im Phasenstrom zeigt, während die andere(n) Phase(n) danach vernachlässigt/nicht mehr angesteuert werden.

Die Verringerung der Phasenspannung kann beispielsweise um jeweils 1-25%, bevorzugt 5-20%, am meisten bevorzugt um etwa 10% des jeweiligen vorherigen Werts erfolgen. Alternativ kann die Verringerung abhängig von der Differenz zweier vorhergehender Extremwerte und/oder der Differenz des letzten Extremwerts zum Mittelwert des Phasenstroms erfolgen.

Gemäß einer Ausführungsform wird die Phasenspannung auf einen konstanten Wert verringert. Konstante Phasenspannungen sind einfach zu erzeugen, daher ist es bevorzugt, die Phasenspannung stufenweise auf jeweils konstante Werte zu verringern.

Gemäß der Erfindung wird das Verringern der Phasenspannung eingestellt, nachdem eine vorgegebene Anzahl von Extremwerten aufgetreten ist oder die Differenz im Phasenstrom zwischen den letzten beiden Extremwerten einen Minimalwert unterschritten hat.

Bei dem erfindungsgemäßen Verfahren kommt ebenso wie bei dem herkömmlichen Ausrichtvorgang zu einer - wenn auch deutlich schnelleren - asymptotischen Annäherung des Rotors an die Ausrichtposition. Daher ist es bevorzugt, bei einer ausreichenden Annäherung die Verringerung der Phasenspannung zu beenden. In einer einfachen Variante genügt dazu das Abwarten einer vorgegebenen Anzahl an Überschwingern des Rotors. Alternativ kann auch der Grad des verbleibenden Überschwingens berücksichtigt werden, indem die Differenz zwischen den letzten beiden Extremwerten des Phasenstroms betrachtet wird. Sinkt diese Differenz unter einen vorgegebenen Minimalwert, wird von einem ausreichend ausgerichteten Rotor ausgegangen und das weitere Verringern der Phasenspannung eingestellt.

Gemäß einer Ausführungsform wird dem Einstellen der Verringerung der Phasenspannung folgend nach Ablauf einer vorgegebenen Zeitspanne der Reluktanzmotor gestartet. Die vorgegebene Zeitspanne liegt bevorzugt zwischen 0 und der zeitlichen Differenz zwischen dem Auftreten von zwei Extremwerten.

Gemäß einer Ausführungsform wird die Phasenspannung durch Pulsbreitenmodulation erzeugt. Dies erlaubt durch Anpassen des Tastgrades eine sehr einfache Erzeugung der nötigen Phasenspannung aus einer vorhandenen Spannung, insbesondere das Absenken der Phasenspannung von einem möglichen Maximalwert. Beispielsweise kann die initiale Phasenspannung einem Tastgrad von 100% entsprechen, der dann sukzessive verringert wird. Zur Glättung kann optional ein Tiefpassfilter verwendet werden.

Gemäß einem weiteren Aspekt der Erfindung wird eine Ansteuerschaltung für einen geschalteten Reluktanzmotor mit mindestens einer Phase bereitgestellt, umfassend:
- mindestens eine H-Brücke für jede Phase des Reluktanzmotors; und
- eine Steuereinheit, die eingerichtet ist zum:
- Anlegen einer konstanten Phasenspannung an mindestens eine Phase des ruhenden Reluktanzmotors;
- Bestimmen des Verlaufs des Phasenstroms in der Phase; und
- Regeln der Phasenspannung abhängig von dem Verlauf des Phasenstroms.

Gemäß einer Ausführungsform ist die Steuereinheit eingerichtet, die angelegte Phasenspannung zu verringern, nachdem ein lokaler Extremwert des Phasenstroms auftritt. Bevorzugt ist die Steuereinheit eingerichtet, die Phasenspannung auf einen konstanten Wert zu verringern.

Gemäß einer Ausführungsform ist die Steuereinheit eingerichtet, das Verringern der Phasenspannung einzustellen, nachdem eine vorgegebene Anzahl von Extremwerten aufgetreten ist oder die Differenz im Phasenstrom zwischen den letzten beiden Extremwerten einen Minimalwert unterschritten hat.

Gemäß einer Ausführungsform ist die Steuereinheit eingerichtet, dem Einstellen der Verringerung der Phasenspannung folgend nach Ablauf einer vorgegebenen Zeitspanne durch Ansteuern der H-Brücke(n) den Reluktanzmotor zu starten.

Gemäß einer Ausführungsform wird die Phasenspannung durch Pulsbreitenmodulation der H-Brücke erzeugt, optional mit einem Tiefpassfilter.

Gemäß noch einem weiteren Aspekt der Erfindung wird ein geschalteter Reluktanzmotor bereitgestellt, der eine vorstehende beschrieben Ansteuerschaltung umfasst, und der keinen Rotorlagesensor umfasst. Der Reluktanzmotor kann in einem beliebigen Haushaltgerät eingesetzt werden, beispielsweise in einem Staubsauger oder einer Dunstabzugshaube als Gebläsemotor. Ebenso denkbar ist die Verwendung als Antriebsmotor in Haushaltgeräten, beispielsweise einem Trockner oder einer Küchenmaschine.

Ausführungsbeispiele der Erfindung werden in den Zeichnungen rein schematisch dargestellt und nachfolgend näher beschrieben. Sofern nichts anderes angegeben ist, können einzelne Merkmale aus verschiedenen Ausführungsformen beliebig kombiniert werden.

Es zeigt
- Figur 1: einen zweiphasigen geschalteten Reluktanzmotor schematisch im Querschnitt;
- Figur 2: den Verlauf der Induktivität in Abhängigkeit von der Rotorposition des Motors aus Fig. 1;
- Figur 3: den Verlauf von Phasenstrom und Phasenspannung beim unbeeinflussten Einschwingen eines geschalteten Reluktanzmotor;
- Figur 4: den Verlauf von Phasenstrom und Phasenspannung bei einem geschalteten Reluktanzmotor, der gemäß einer Ausführungsform angesteuert wird; und
- Figur 5: eine schematische Ansteuerschaltung gemäß einer Ausführungsform.

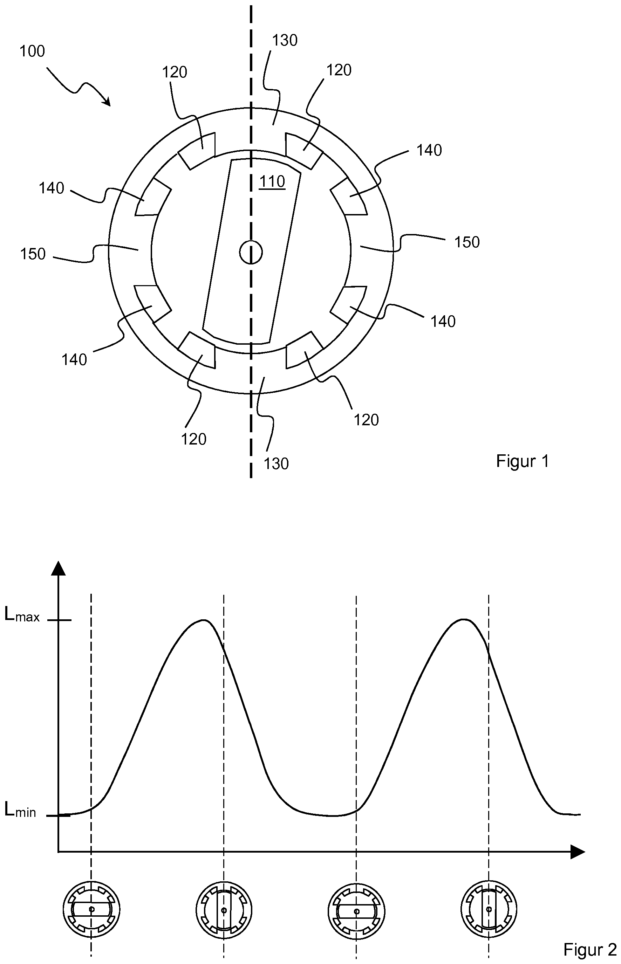

In Figur 1 ist schematisch als Querschnittsansicht ein zweiphasiger geschalteter Reluktanzmotor 100 gezeigt. Dies dient der Einfachheit halber im Folgenden als Beispiel für einen SRM, für einen Motor mit anderer Phasenzahl kann die Erfindung jedoch ebenso verwendet werden. Wie in Fig. 1 gezeigt, befindet sich der Rotor 110 derzeit nicht in der ausgerichteten Position.

Der Stator besteht aus vier Windungen 120, 140. Die gegenüberliegenden Windungen 120 bzw. 140 gehören zu je einem Statorpol 130 bzw. 150 und werden immer gleichzeitig bestromt. Beim exemplarisch gezeigten zweiphasigen Motor 100 sind die beiden Phasen entsprechend den jeweiligen Statorpolen 130, 150 orthogonal zueinander ausgerichtet. Der Rotor 110 besteht aus einem gestanzten Blechpaket. Sobald eine Phase angesteuert wird, entsteht ein Magnetfeld, das den Rotor 110 in die jeweilige Phasenposition zieht. Bei Ansteuerung der Phase mit den Statorpolen 130 entspricht diese Position der gestrichelten Linie, d.h. der Rotor 110 wäre genau vertikal ausgerichtet, bei der anderen Phase entsprechend horizontal.

Figur 2 zeigt die Induktivität der Phase in Abhängigkeit von der Rotorposition bei einem Motor wie aus Fig. 1. Bei einem Reluktanzmotor wird der Rotor bei angesteuerter Phase versuchen, die Stellung einzunehmen, in der die Reluktanz das Minimum bzw. die Induktivität ihr Maximum erreicht. Je nach der gezeigten Stellung des Rotors nimmt die Induktivität L einen Wert zwischen dem Minimalwert *L*ₘᵢₙ und dem Maximalwert *L*ₘₐₓ ein.

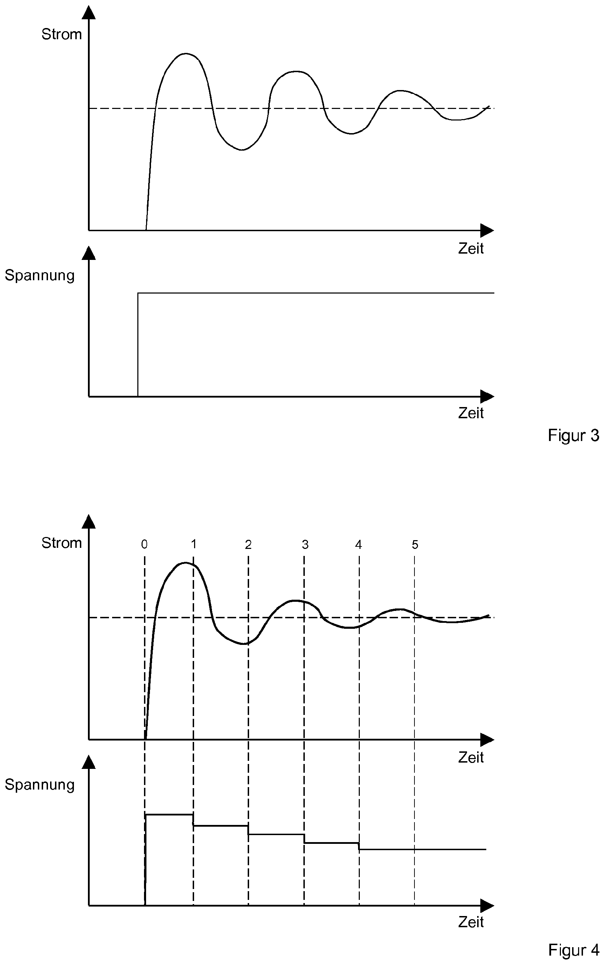

In Figur 3 sind der Verlauf von Phasenstrom und Phasenspannung beim unbeeinflussten Einschwingen eines geschalteten Reluktanzmotor schematisch gezeigt. Ausgehend von einem zufällig ausgerichteten Rotor wird dieser sich nach dem Anlegen einer Gleichspannung in die entsprechende Ausrichtposition drehen. Der Rotor bleibt jedoch nicht sofort in der Ausrichtposition stehen, sondern schwingt um diese herum, bis er steht. Die Schwingung ist wie ein Feder-Masse-Element, das sich langsam in die Ausrichtposition einschwingt.

Es sei angemerkt, dass die Figur 3 nur schematisch den charakteristischen Verlauf zeigt, da in der Realität die Anzahl der Schwingungen um ein Vielfaches höher ist bzw. die Verringerung des Phasenstroms pro Schwingung sehr viel geringer ausfällt. Da der Rotor abhängig von der Güte der Lagerung nur eine sehr geringe Reibung erfährt, verringert sich die Amplitude des Phasenstroms pro Schwingung nur unwesentlich. Es können daher sehr viele Schwingungen auftreten, bevor er zum Stillstand kommt.

Der Phasenstrom steigt an und schwingt sich dann auf den gestrichelt gezeigten Mittelwert ein. Die Frequenz der Schwingung ist konstant, weil diese vom Trägheitsmoment J des rotierenden Systems abhängt. Die Amplitude der Schwingung wird mit der Zeit immer geringer. In der Realität steht der Rotor auch nicht wie in der Figur dargestellt nach wenigen Schwingungen still, sondern er schwingt sehr lange um die Ausrichtposition. Die Figur soll lediglich schematisch den charakteristischen Verlauf der Stromform darstellen. Die Amplitude des Phasenstroms ändert sich, weil die Induktivität der Phase von der Position des Rotors abhängig ist, wie in Fig. 2 gezeigt.

Durch diese Abhängigkeit schwingt der Gleichstrom solange, wie der Rotor auch schwingt. Sobald der Rotor steht, ist auch der Gleichstrom konstant und ohne jegliche Schwingung (eine konstante Phasenspannung vorausgesetzt). Wenn man aufgrund dieses Sachverhaltes die Stromschwingung betrachtet, so kann man folgendes festhalten: In den Positionen, in denen der Phasenstrom den Mittelwert einnimmt, d.h. der Strom die gestrichelte Linie kreuzt, befindet sich der Rotor in der ausgerichteten Position. Während des Einschwingvorgangs befindet er sich aber nicht in Ruhe, sondern führt eine Drehung aus, die ihn über die Ausrichtposition hinaus schwingen lässt. In den Positionen, in denen der Phasenstrom ein (lokales) Maximum oder Minimum einnimmt, ist der Rotor über die Ausrichtposition hinaus übergeschwungen, und steht gerade im Begriff, zurück in die Ausrichtposition zu schwingen.

Diesen Sachverhalt macht sich die Erfindung zur Verkürzung der Schwingung in der Ausrichtphase zu Nutze. Die Phasenspannung ist die dazu verfügbare Stellgröße. Erfindungsgemäß wird die angelegte Phasenspannung in Abhängigkeit des gemessenen Stromes geregelt, um die Schwingung zu begrenzen bzw. zu verkürzen.

In Figur 4 sind der Verlauf von Phasenstrom und Phasenspannung bei einem geschalteten Reluktanzmotor gezeigt, der gemäß einer Ausführungsform angesteuert wird. Schritt 0: Die Gleichspannung wird angelegt, der Strom in der Phase baut sich auf und der Rotor fängt an, sich auszurichten. Die Gleichspannung kann konstant sein oder einen geeigneten definierten Verlauf aufweisen. Der sich ergebende Phasenstrom wird permanent gemessen.

Schritt 1: Sobald in der Stromform das erste Maximum festgestellt wurde, das ist zeitlich kurz nach dem Maximum, wird die angelegte Spannung reduziert. Beim ersten Strommaximum ist der Rotor übergeschwungen und gerade im Begriff, in die Ausrichtposition zurückzukehren. Wird jetzt erfindungsgemäß die Phasenspannung verringert, so erreicht man, dass der nächste Überschwinger des Rotors kleiner ausfällt. Bevorzugt wird die Phasenspannung auf einen konstanten Wert reduziert.

Schritt 2: Sobald das nächste Minimum gemessen wurde, wird wie auch in Schritt 1 die Phasenspannung wieder ein Stück verringert, um den nächsten Überschwinger von der Amplitude her zu minimieren. In den Schritten 3 und 4 wird analog verfahren, d.h. nach Messen eines lokalen Extremwerts bzw. Maximum/Minimum wird die Phasenspannung jeweils verringert. Die Verringerung der Phasenspannung kann bevorzugt abhängig von dem Grad des Einschwingens erfolgen, d.h. je geringer die Ausschläge des Rotors sind, desto geringer fällt die Verringerung der Phasenspannung aus. Das kann erfindungsgemäß an der Differenz zwischen den zwei vorherigen Extremwerten des Phasenstroms und/oder der Differenz zum Mittelwert des Phasenstroms erkannt werden. In einer beispielhaften Ausführungsform wird die Phasenspannung um je 10% verringert.

In Schritt 5 erfolgt hingegen keine weitere Verringerung der Phasenspannung, sondern diese wird konstant gehalten. Dieser Schritt 5 erfolgt dann, wenn erkannt wurde, dass der Rotor genügend eingeschwungen ist bzw. annähernd in der Ausrichtposition stillsteht. Erfindungsgemäß kann dies beispielsweise daran erkannt werden, dass die Differenz im Phasenstrom zum vorhergehenden Extremwert und/oder dem Mittelwert einen Minimalwert unterschreitet. Alternativ kann eine vorgegebene Anzahl von Extremwerten bzw. Überschwingern des Rotors abgewartet werden. Nicht gezeigt ist, dass nach einem Konstanthalten der Phasenspannung für eine vorgebbare Zeitspanne der Reluktanzmotor gestartet wird.

Wie man beim Vergleich der Verläufe von Figur 4 und Figur 3 erkennen kann, hat sich durch die erfindungsgemäße Ansteuerung der Grad des Überschwingens reduziert. Dies bedeutet wiederum, dass der Rotor nach einer kürzeren Zeit stillsteht bzw. nach weniger Überschwingern den gleichen Zustand einnimmt wie er im Fall der Figur 3 erst nach deutlich mehr Überschwingern einnimmt bzw. einnehmen würde. Hierbei ist erneut anzumerken, dass die Verläufe in Figur 3 und 4 lediglich schematisch das Verhalten darstellen, da in der Realität eine deutlich größere Anzahl von Überschwingern beim unbeeinflussten Einschwingen des Rotors erfolgt und die Abnahme des Phasenstroms deutlich geringer ist. Die Anzahl der Schwingungen und der Wert bzw. die Abnahme des Phasenstroms sind nur als Prinzipdarstellung zu verstehen.

In der Realität können unbeeinflusst hunderte Schwingungen erfolgen, bis der Rotor steht, wohingegen mit der Erfindung der Rotor bereits mit einigen wenigen Schwingungen zum Stillstand kommen kann.

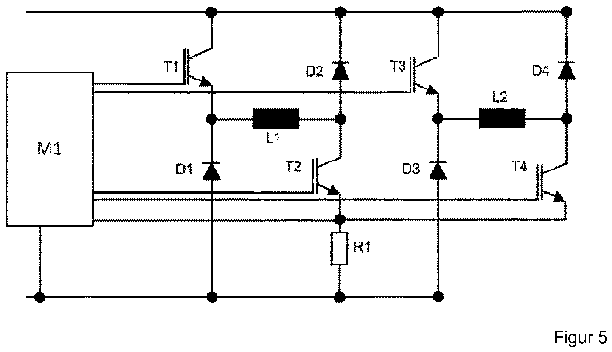

In Figur 5 ist schematisch eine Ansteuerschaltung gemäß einer Ausführungsform gezeigt. Die zweifache H-Brücke besteht aus zwei schaltbaren Leistungshalbleitern und zwei Dioden pro Phase. Die Elemente T1, T2, D1 und D2 bestromen die Phase L1 des Motors. Die anderen Elemente T3, T4, D3 und D4 bestromen die Phase L2 des Motors. Vor dem Hochlauf muss der Motor, da er keinen Rotorlagesensor hat, in eine definierte Position ausgerichtet werden. Dies erfolgt, indem über die Leistungshalbleiter T1 und T2 eine Gleichspannung an Phase L1 des Motors angelegt wird. Die Höhe der Gleichspannung kann über den Tastgrad der Leistungshalbleiter eingestellt werden, ggf. mit einem zusätzlichen Tiefpassfilter. Die Steuereinheit M1 steuert die Leistungshalbleiter T1 und T2 gemäß dem vorstehend beschriebenen Verfahren. Der Phasenstrom wird über einen Widerstand R1 gemessen.

In einer beispielhaften Ausführung wird der Leistungshalbleiter T2 durchgeschaltet bzw. auf leitend geschaltet, während der Leistungshalbleiter T1 mittels PWM-Ansteuerung geschaltet wird, um eine definierte Phasenspannung zu erzeugen.

Unter Verwendung der erfindungsgemäßen Ansteuerung steht der Rotor bereits nach einigen Schwingungen. Ohne diese Vorgehensweise würde ein weichgelagerter Rotor bis zu einigen hundert Malen schwingen. Haushaltgeräte, die einen erfindungsgemäß arbeitenden Reluktanzmotor aufweisen, sind daher schneller betriebsbereit und komfortabler für den Benutzer.

## Patentansprüche

1. Verfahren zur Ansteuerung eines geschalteten Reluktanzmotors (100), umfassend:
- Anlegen einer definierten Phasenspannung an mindestens eine Phase des ruhenden Reluktanzmotors;
- Bestimmen des Verlaufs des Phasenstroms in der Phase; und
- Regeln der Phasenspannung abhängig von dem Verlauf des Phasenstroms;
**dadurch gekennzeichnet, dass**
die angelegte Phasenspannung jeweils verringert wird, nachdem ein lokaler Extremwert des Phasenstroms auftritt, und das Verringern der Phasenspannung eingestellt wird, nachdem eine vorgegebene Anzahl von Extremwerten aufgetreten ist oder die Differenz im Phasenstrom zwischen den letzten beiden Extremwerten einen Minimalwert unterschritten hat.

2. Verfahren nach Anspruch 1, wobei die Phasenspannung auf einen konstanten Wert verringert wird.

3. Verfahren nach Anspruch 1 oder 2, wobei dem Einstellen der Verringerung der Phasenspannung folgend nach Ablauf einer vorgegebenen Zeitspanne der Reluktanzmotor gestartet wird.

4. Verfahren nach einem der vorhergehenden Ansprüche, wobei die Phasenspannung durch Pulsbreitenmodulation erzeugt wird.

5. Ansteuerschaltung für einen geschalteten Reluktanzmotor (100) mit mindestens einer Phase, umfassend:
- mindestens eine H-Brücke für jede Phase des Reluktanzmotors; und
- eine Steuereinheit, die eingerichtet ist zum:
- Anlegen einer definierten Phasenspannung an mindestens eine Phase des ruhenden Reluktanzmotors;
- Bestimmen des Verlaufs des Phasenstroms in der mindestens einen Phase; und
- Regeln der Phasenspannung abhängig von dem Verlauf des Phasenstroms;
**dadurch gekennzeichnet, dass**
die Steuereinheit eingerichtet ist, die angelegte Phasenspannung jeweils zu verringern, nachdem ein lokaler Extremwert des Phasenstroms auftritt, und das Verringern der Phasenspannung einzustellen, nachdem eine vorgegebene Anzahl von Extremwerten aufgetreten ist oder die Differenz im Phasenstrom zwischen den letzten beiden Extremwerten einen Minimalwert unterschritten hat.

6. Ansteuerschaltung nach Anspruch 5, wobei die Steuereinheit eingerichtet ist, die Phasenspannung auf einen konstanten Wert zu verringern.

7. Ansteuerschaltung nach Anspruch 5 oder 6, wobei die Steuereinheit eingerichtet ist, dem Einstellen der Verringerung der Phasenspannung folgend nach Ablauf einer vorgegebenen Zeitspanne durch Ansteuern der H-Brücke(n) den Reluktanzmotor zu starten.

8. Ansteuerschaltung nach einem der vorhergehenden Ansprüche 5 bis 7 wobei die Phasenspannung durch Pulsbreitenmodulation der H-Brücke, optional mit einem Tiefpassfilter, erzeugt wird.

9. Geschalteter Reluktanzmotor, umfassend eine Ansteuerschaltung nach einem der Ansprüche 5 bis 8.

10. Haushaltgerät, umfassend einen Reluktanzmotor nach Anspruch 9.

## Claims

1. Method for controlling a switched reluctance motor (100), comprising:
- applying a defined phase voltage to at least one phase of the stationary reluctance motor;
- determining the course of the phase current in the phase; and
- regulating the phase voltage depending on the course of the phase current;
**characterised in that** the applied phase voltage is reduced in each case after a local extreme value of the phase current occurs, and the reduction of the phase voltage is stopped after a predetermined number of extreme values has occurred or the difference in the phase current between the last two extreme values has fallen below a minimum value.

2. Method according to claim 1, wherein the phase voltage is reduced to a constant value.

3. Method according to either claim 1 or claim 2, wherein the reluctance motor is started following the stopping of the reduction of the phase voltage after a predetermined period of time has elapsed.

4. Method according to any of the preceding claims, wherein the phase voltage is generated by pulse width modulation.

5. Control circuit for a switched reluctance motor (100) with at least one phase, comprising:
- at least one H-bridge for each phase of the reluctance motor; and
- a control unit which is designed to:
- apply a defined phase voltage to at least one phase of the stationary reluctance motor;
- determine the course of the phase current in the at least one phase; and
- regulate the phase voltage depending on the course of the phase current;
**characterised in that** the control unit is designed to reduce the applied phase voltage in each case after a local extreme value of the phase current occurs, and to stop the reduction of the phase voltage after a predetermined number of extreme values has occurred or the difference in the phase current between the last two extreme values has fallen below a minimum value.

6. Control circuit according to claim 5, wherein the control unit is designed to reduce the phase voltage to a constant value.

7. Control circuit according to either claim 5 or claim 6, wherein the control unit is designed to start the reluctance motor by controlling the H-bridge(s) following the stopping of the reduction of the phase voltage after a predetermined period of time has elapsed.

8. Control circuit according to any of the preceding claims 5 to 7, wherein the phase voltage is generated by pulse width modulation of the H-bridge, optionally with a low-pass filter.

9. Switched reluctance motor, comprising a control circuit according to any of claims 5 to 8.

10. Domestic appliance, comprising a reluctance motor according to claim 9.

## Revendications

1. Procédé de commande d'un moteur à réluctance commutée (100), comprenant :
- l'application d'une tension de phase définie à au moins une phase du moteur à réluctance à l'arrêt ;
- la détermination de l'allure du courant de phase dans la phase ; et
- la régulation de la tension de phase en fonction de l'allure du courant de phase ;
**caractérisé en ce que** la tension de phase appliquée respective est réduite après l'apparition d'une valeur extrême locale du courant de phase, et **en ce que** la diminution de la tension de phase est réglée après l'apparition d'un nombre prédéterminé de valeurs extrêmes, ou après que la différence de courant de phase entre les deux dernières valeurs extrêmes est tombée en dessous d'une valeur minimale.

2. Procédé selon la revendication 1, dans lequel la tension de phase est réduite à une valeur constante.

3. Procédé selon la revendication 1 ou 2, dans lequel, après le réglage de la réduction de la tension de phase, le moteur à réluctance est démarré après une période de temps prédéterminée.

4. Procédé selon l'une des revendications précédentes, dans lequel la tension de phase est générée par modulation de largeur d'impulsion.

5. Circuit de commande pour un moteur à réluctance commuté (100) comportant au moins une phase, comprenant :
- au moins un pont en H pour chaque phase du moteur à réluctance ; et
- une unité de commande configurée pour :
- l'application d'une tension de phase définie à au moins une phase du moteur à réluctance à l'arrêt ;
- la détermination de l'allure du courant de phase dans l'au moins une phase ; et
- la régulation de la tension de phase en fonction de l'allure du courant de phase ;
**caractérisé en ce que**
l'unité de commande est configurée pour réduire la tension de phase appliquée après l'apparition d'une valeur extrême locale du courant de phase, et pour régler la diminution de la tension de phase après l'apparition d'un nombre prédéterminé de valeurs extrêmes, ou après que la différence de courant de phase entre les deux dernières valeurs extrêmes est tombée en dessous de la valeur minimale.

6. Circuit de commande selon la revendication 5, dans lequel l'unité de commande est configurée pour réduire la tension de phase à une valeur constante.

7. Circuit de commande selon la revendication 5 ou 6, dans lequel l'unité de commande est configurée pour démarrer le moteur à réluctance après le réglage de la réduction de la tension de phase après une période de temps prédéterminée en commandant le ou les ponts en H.

8. Circuit de commande selon l'une des revendications 5 à 7 précédentes, dans lequel la tension de phase est générée par modulation de largeur d'impulsion du pont en H, éventuellement à l'aide d'un filtre passe-bas.

9. Moteur à réluctance commuté, comprenant un circuit de commande selon l'une des revendications 5 à 8.

10. Appareil électroménager, comprenant un moteur à réluctance selon la revendication 9.
